# EUROPÄISCHE PATENTANMELDUNG

(11) **EP 0 899 061 A2**
(43) Veröffentlichungstag der Anmeldung: **03.03.1999**
(21) Anmeldenummer: 98110669.3
(22) Anmeldetag: 10.06.1998
(51) Int. Cl.: B25B 1/24, B23B 31/16, B23Q 3/06

(54) **Spannbacken- und Spanneinrichtung zum Spannen von Werkstücken**

(30) Priorität: 29.08.1997 DE 19737684; 13.12.1997 DE 19755517
(71) Anmelder: Fritz Schunk GmbH & Co KG Fabrik für Spann- und Greifwerkzeuge, 74348 Lauffen (DE)
(72) Erfinder:
(74) Vertreter: Dreiss, Fuhlendorf, Steimle & Becker

(57) **Zusammenfassung**

Spannbacken für eine Spanneinrichtung zum Spannen von Werkstücken, mit einem Grundkörper und einer an das zu spannende Werkstück anlegbaren Spannseite, wobei die Spannseite von einer Vielzahl von relativ zum Grundkörper mittels einer Steuereinrichtung (80) verschiebbaren Spannstösseln (64, 118, 161) gebildet ist, welche an die Kontur des zu spannenden Werkstücks (18) anlegbar sind, und wobei die hierbei gebildete zur Kontur des Werkstücks (18) komplementäre Kontur der Spannseite durch eine Arretierungseinrichtung (90, 112) lösbar unverformbar gestellt werden kann, um auch eine pneumatische oder eine anderswirkende Steuereinrichtung zum Hin- und Herschieben der Spannstössel einsetzen zu können, wird der Spannbacken so ausgebildet, dass die Arretierungseinrichtung (90, 112) von der Steuereinrichtung (80) zum Verschieben der Spannstössel (64, 118, 161) unabhängige Klemmmittel (91, 113) umfasst, welche radial auf einen jeweiligen Spannstössel (64, 118, 161) einwirken, um diesen in seiner gerade eingenommenen Verschiebelage zu fixieren.

## Beschreibung

Die Erfindung betrifft einen Spannbacken für eine Spanneinrichtung zum Spannen von Werkstücken, mit den Merkmalen des Oberbegriffs des Anspruchs 1. Spannbacken sind Bestandteile von Spanneinrichtungen, wie zum Beispiel Schraubstöcken, Werkzeugmaschinen oder Bearbeitungszentren, zum Festhalten von Werkstücken, insbesondere zur Werkstückbearbeitung.

Spannbacken der eingangs beschriebenen Art sind in der DE 42 39 180 A1 beschrieben. Bei diesen bekannten Spannbacken sind die Spannstössel hydraulisch gesteuert innerhalb ihres jeweiligen Zylinderraums hin- und herverschiebbar. Zum Unverformbarstellen bzw. Fixieren der Spannstössel in ihrer jeweiligen Verschiebelage wird durch Schließen eines Absperrventils ein Zu- oder Abfließen von Hydraulikflüssigkeit in oder aus dem Zylinderraum beidseits eines Stösselkolbens verhindert. Die hydraulische Steuereinrichtung zum Hin- und Herverschieben der Stössel wird in der vorbeschriebenen Weise dazu verwendet, die Stössel unverformbar zu stellen. Entsprechende Spannvorrichtungen sind aus DE-A-195 47 027 und DE-A-195 39 488 bekannt.

Hiervon ausgehend liegt der vorliegenden Erfindung die Aufgabe zugrunde, einen Spannbacken der eingangs erwähnten Art zu schaffen, bei dem -sofern dies erwünscht sein sollte- auch eine pneumatische oder eine anderswirkende Steuereinrichtung zum Hin- und Herschieben der Spannstössel einsetzbar ist. Außerdem erweist es sich als schwierig, die Steuereinrichtung so auszubilden, dass sie auch zum Arretieren der Spannstössel einsetzbar ist, so dass diesbezüglich eine Vereinfachung geschaffen werden soll.

Diese Aufgabe wird bei einem Spannbacken der genannten Art erfindungsgemäß dadurch gelöst, dass die Arretierungseinrichtung von der Steuereinrichtung zum Verschieben der Spannstössel unabhängige Klemmmittel umfasst, welche radial auf einen jeweiligen Spannstössel einwirken, um diesen in seiner gerade eingenommenen Verschiebelage zu fixieren.

Hierdurch eröffnet sich die Möglichkeit, auch eine pneumatische Steuereinrichtung zum Verschieben der Spannstössel einzusetzen, die in einfachster Weise ausgebildet werden kann, oder die Spannstössel nur mechanisch in Richtung auf das Werkstück vorzuspannen.

Nach einer Ausführungsform der Erfindung sind die Klemmmittel von radial auf einen jeweiligen Spannstössel einwirkenden Klemmkolben gebildet. Es hat sich desweiteren als zweckmäßig erwiesen, wenn ein Klemmbereich des jeweiligen Klemmkolbens der Umfangskontur der Spannstössel angepasst ist, weil hierdurch aufgrund der Maximierung der Klemmfläche eine gute Klemmung erreicht werden kann.

Vorzugsweise sind die Klemmkolben gemeinsam betätigbar. Dies kann beispielsweise dadurch erreicht werden, dass die Klemmkolben auf ihrer von dem jeweiligen Spannstössel abgewandten Seite mit einer gemeinsamen hydraulischen Druckmittelleitung kommunizieren. Durch manuelles Drehen an einer in die Druckmittelleitung eingeschraubten Stellschraube kann der Druck derart erhöht werden, dass die Klemmkolben gegen die Umfangsfläche der Spannstössel gedrückt werden, so dass diese fixiert werden. Es wäre aber auch denkbar, dass die Druckmittelleitung mit einer hydraulischen Druckmittelversorgungseinrichtung zusammenwirkt.

Nach einer weiteren Ausführungsform der Erfindung sind die Klemmmittel von jeweils einer einen jeweiligen Spannstössel umgebenen Klemmhülse gebildet, die durch Beaufschlagen mittels einen fluiden Arbeitsmediums mit ihrer der Umfangsfläche des jeweiligen Spannstössels zugewandten Innenseite derart gegen diese Umfangsfläche drückbar ist, dass der jeweilige Spannstössel in seiner gerade eingenommenen Verschiebelage fixierbar ist.

Durch die Verwendung einer Klemmhülse lässt sich ein gleichmäßiger nach radial innen gerichteter Klemmdruck auf den jeweiligen Spannstössel ausüben. Es besteht daher nicht die Gefahr, dass die Umfangsfläche des Spannstössels beschädigt wird. Desweiteren ist eine derartige Ausführung infolge der symmetrischen Einleitung der Klemmkraft weniger störanfällig und platzsparender als die vorstehend erwähnte Klemmung mittels radialer Klemmkolben.

Die Klemmhülse ist gegenüber dem Grundkörper vorzugsweise unverschieblich angeordnet und kann gegen eine Stufe der Spannstösselbohrung oder des Zylinderraums der Spannstössel abgestützt sein.

Der Zylinderraum könnte so ausgebildet sein, dass er einen radial äußeren Druckraum bildet, welcher die Klemmhülse konzentrisch umgibt. Demgegenüber kann in vorteilhafter Weise die Klemmhülse so ausgebildet sein, dass sie an ihrem äußeren Umfang den Druckraum bildet, der vorzugsweise als die Klemmhülse konzentrisch umgebender Ringraum ausgebildet ist. Bei der Klemmhülse handelt es sich vorzugsweise um eine Bundhülse, wobei die beiderseitigen Bundabschnitte den Druckraum in axialer Richtung begrenzen. Die Bundabschnitte dienen auch vorzugsweise dazu, den Druckraum über je ein radial äußeres Dichtelement gegen die den Spannstössel aufnehmende Bohrung im Grundkörper abzudichten.

Es hat sich desweiteren als vorteilhaft erwiesen, wenn die Verschiebbarkeit der Spannstössel durch einen Endanschlag begrenzt ist. Der Endanschlag innerhalb des Zylinderraums kann vorteilhafterweise von einer Stirnseite der jeweiligen Klemmhülse gebildet sein.

In Weiterbildung der Erfindung von ganz besonderer Bedeutung weist die jeweilige Klemmhülse eine mit ihrer Innenseite gegen die Umfangsfläche eines Spannstössels anlegbare Innenhülse und eine Außenhülse auf, wobei zwischen Außenhülse und Innenhülse ein Druckraum gebildet ist, in welchen unter Druck stehendes fluides Arbeitsmedium einleitbar ist, um die Innenhülse in klemmende Anlage gegen die Umfangsfläche des Spannstössels zu bringen.

Es erweist sich desweiteren als vorteilhaft, wenn die Außenhülse und der die Spannstössel und die Hülse aufnehmende Zylinderraum zueinander komplementär gestuft ausgebildet sind. Dies hat den Vorteil, dass die Klemmhülse in den Zylinderraum in eine definierte Montageposition eingesetzt werden kann.

Solchenfalls ist vorzugsweise ein erstes radial äußeres Dichtelement in einem ersten Stufenabschnitt und ein zweites radial äußeres Dichtelement in einem zweiten Stufenabschnitt, dessen Durchmesser größer ist als der des ersten, angeordnet. Zwischen dem ersten und dem zweiten Dichtelement mündet eine Zuführöffnung für ein fluides Arbeitsmedium, welches in den Druckraum einleitbar ist. Diese Ausführungsform bringt den Vorteil mit sich, dass die Zuführöffnung beim Einführen und Entnehmen der Klemmhülse nicht von einem eng anliegenden Dichtelement überfahren wird, welches sich dann in die Zuführöffnung hinein deformiert und von deren Kante beschädigt werden könnte.

Bei einer bevorzugten Ausführungsform der zweiteiligen Klemmhülse ist die Innenhülse vorzugsweise gegen eine axiale Stufe an der Innenseite der Außenhülse abgestützt. Hierbei ist die radiale Tiefe der Stufe der Außenhülse und die Dicke der Innenhülse so aufeinander abgestimmt, dass die den Spannstösseln zugewandte Führungsfläche stufenfrei, also gleichmäßig ineinander übergehend ist. Zum Montieren der Klemmhülse kann die Innenhülse solchenfalls von der der Stufe abgewandten Seite der Außenhülse in diese eingeschoben werden. Zum Abdichten des Druckraums sind zwischen der Außenhülse und der Innenhülse konzentrische Dichtelemente vorgesehen.

Um eine Beschädigung der Werkstückoberfläche zu vermeiden, kann die Spannseite des Spannbackens ein gegen die Oberfläche anlegbares elastomeres Material umfassen oder mit einem Überzug aus einem elastomeren Material versehen sein. Die Spannstössel können insbesondere mit einer die Spannseite bildenden elastomeren Membran überspannt sein. Dadurch wird eine geschlossene Spannfläche gebildet, mit der das Eindringen von Schmutz in den Zwischenraum zwischen den Spannstösseln verhindert werden kann.

Erfindungsgemäße Spannbacken werden beispielsweise in Spanneinrichtungen eingesetzt, die einen in Spannrichtung verfahrbaren Schlitten aufweisen. Solchenfalls umfassen die Spannbacken eine Kopplungseinrichtung im weitesten Sinne zum Montieren der Spannbacken an den Schlitten der Spanneinrichtung. Wird der erfindungsgemäße Spannbacken an einem Schraubstock verwandt, so braucht lediglich der Grundkörper des Spannbackens an der einen oder anderen Hälfte des Schraubstocks befestigt zu werden. Es versteht sich, dass vom Erfindungsgedanken auch Spanneinrichtungen erfasst sind, die einen Spannbacken der erfindungsgemäßen Art aufweisen.

Vorteilhafterweise umfasst ein Spannbacken auch eine mit einer Steuerung zusammenwirkende Wegmesseinrichtung zum Erfassen der aktuellen Gestalt der Spannseite. Hierfür sind vorzugsweise mehrere einem jeweiligen Spannstössel zugeordnete Messwertaufnehmer vorgesehen.

Weitere Merkmale, Vorteile und Einzelheiten der Erfindung ergeben sich aus den beigefügten Patentansprüchen und der zeichnerischen Darstellung und nachfolgenden Beschreibung bevorzugter Ausführungsformen des erfindungsgemäßen Spannbackens. In der Zeichnung zeigt:
- Figur 1: eine Teilansicht einer Tandemspanneinrichtung mit zwei verschieblichen erfindungsgemäßen Spannbacken;
- Figur 2: eine Seitenansicht eines mit erfindungsgemäßen Spannbacken bestückten Schraubstocks;
- Figur 3: eine Draufsicht auf ein mit erfindungsgemäßen Spannbacken bestücktes Dreibackenfutter;
- Figur 4: eine Seitenansicht eines mit erfindungsgemäßen Spannbacken bestückten Parallelgreifers;
- Figur 5: eine teilweise Längsschnittansicht einer Ausführungsform eines Spannbackens aus der die Verschieblichkeit und Arretierbarkeit eines Spannstössels hervorgeht;
- Figur 6: eine Draufsicht auf die Spannseite eines erfindungsgemäßen Spannbackens mit angedeuteter Arretierungseinrichtung;
- Figur 7: eine teilweise geschnittene Ansicht einer weiteren Ausführungsform eines erfindungsgemäßen Spannbackens; und
- Figur 8: eine teilweise geschnitten angedeutete Darstellung einer bevorzugten Ausführungsform einer Klemmhülse.

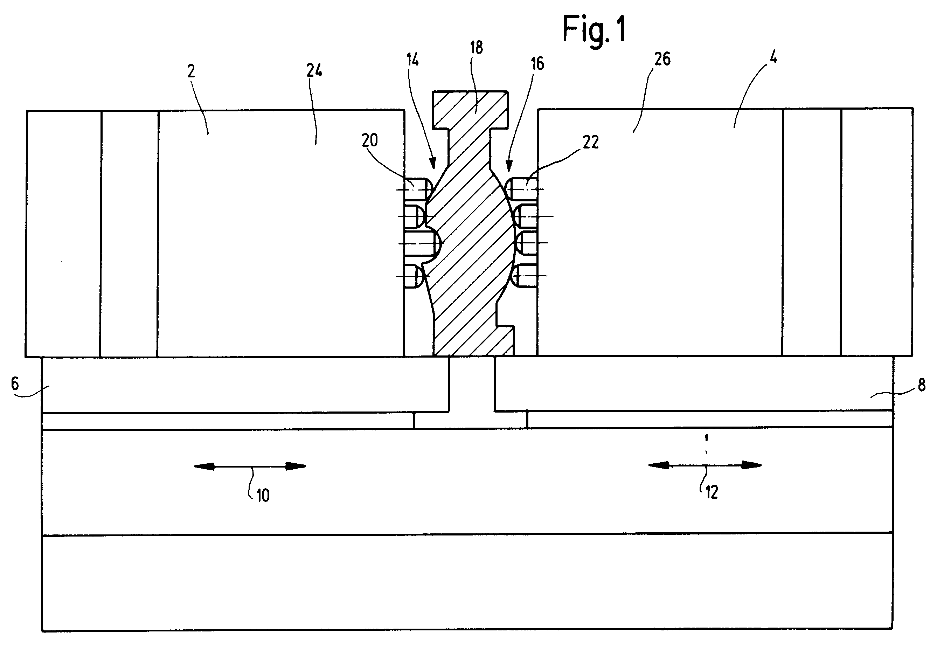

Figur 1 zeigt eine Spannbackenpaarung einer Tandemspanneinrichtung mit zwei aufeinander zu- bzw. voneinander wegbewegbaren Spannbacken 2, 4. Die Spannbacken 2, 4 sind auf je einem Schlitten 6, 8 befestigt, der in Richtung der Pfeile 10, 12 verschieblich ist, so dass die Spannbacken 2, 4 aufeinander zu- und voneinander wegbewegt werden können. Die Gestalt der im Werkstück klemmenden Spannseiten 14, 18 ist durch Anlage an das Werkstück 18 nachgiebig veränderbar und kann in beliebiger Kontur unverformbar gestellt werden. Dies bedeutet, dass die Spannseiten 14, 16 der Gestalt eines Werkstücks angepasst werden können und dann in dieser Gestalt festlegbar sind, so dass eine Vielzahl von identischen Werkstücken gehandhabt werden kann und im Anschluss hieran die Spannseiten 14, 16 auf ein neues Werkstück eingestellt werden können.

Die Spannseiten 14, 16 werden durch die freien Enden einer Vielzahl von Spannstösseln 20, 22 gebildet, die gegenüber einem Grundkörper 24, 26 der Spannbacken 2, 4 verschieblich geführt sind, und zwar in Verschieberichtung bzw. Spannrichtung 10, 12 der Spannbacken.

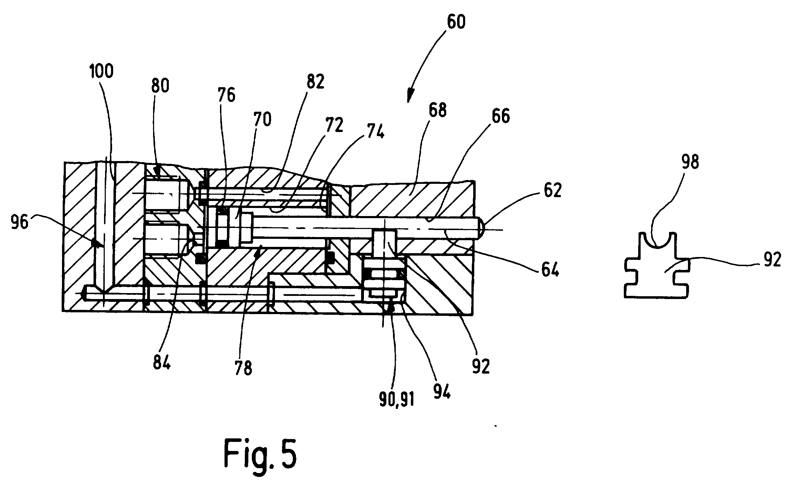

Zum Einstellen der Spannseiten 14, 16 auf ein Werkstück 18 werden die Spannbacken 2, 4 an das Werkstück angelegt, so dass die eingangs bis in eine Endlage ausgefahrenen Spannstössel 20, 22 an die Werkstückoberfläche anschlagen und dann entsprechend der Kontur des Werkstücks 18 in die Gehäusegrundkörper 24, 26 eingefahren werden. Wenn eine zum sicheren Halten des Werkstücks 18 ausreichende Spannstellung erreicht ist, können die Spannstössel über eine in der Figur 1 nicht dargestellte jedoch im Zusammenhang mit der Figur 5 im einzelnen beschriebene Arretierungseinrichtung unverformbar gestellt werden, dass heißt sie können in dieser Position gegenüber dem jeweiligen Grundkörper 24, 26 fixiert werden. Die Spannbacken 2, 4 haben nun die Funktion von Formspannbacken, dass heißt sie sind auf die Geometrie eines bestimmten Werkstücks 18 eingestellt. Es kann nun eine beliebige Anzahl von identischen Werkstücken 18 etwa in einer Serienfertigung aufeinanderfolgend zur Bearbeitung gehalten werden.

Wenn die Spannbacken 2, 4 zur Aufnahme eines anderen Werkstücks mit andersartiger Geometrie verwendet werden sollen, so wird die Arretierungseinrichtung gelöst und die Spannstössel 20, 22 können an eine Werkstückkontur angepasst werden.

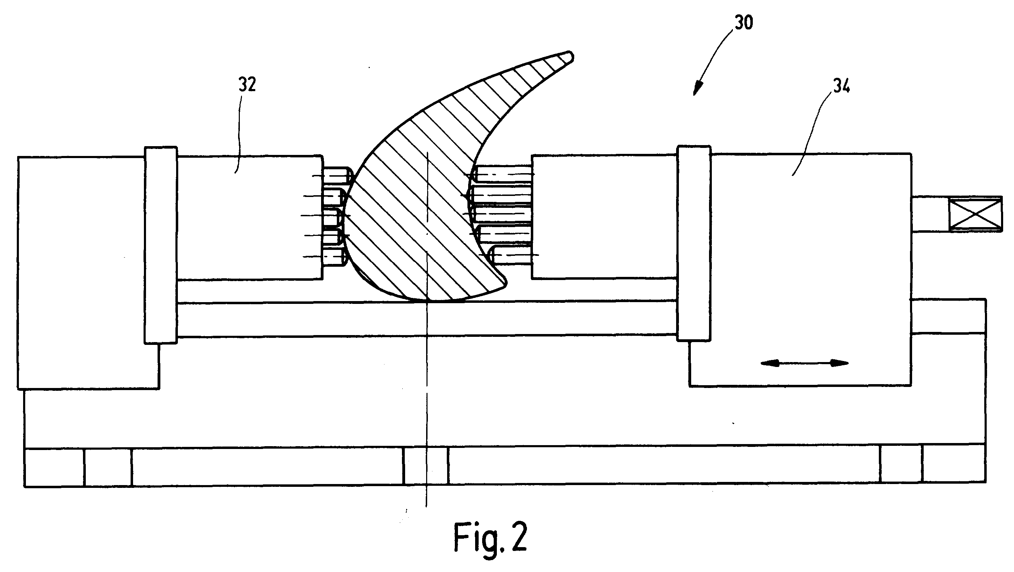

Figur 2 zeigt einen insgesamt mit dem Bezugszeichen 30 bezeichneten Schraubstock mit einer festen Spannbacke 32 und einer bewegbaren Spannbacke 34.

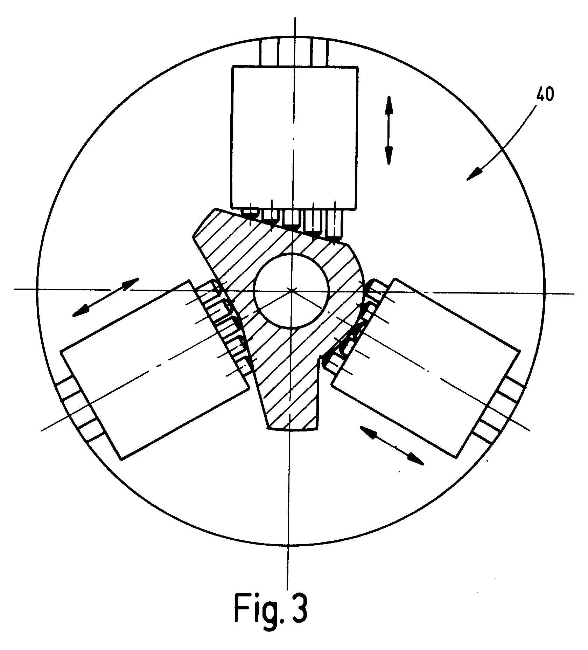

Figur 3 zeigt eine weitere Ausführungsform der Erfindung in Form einer Spanneinrichtung 40 mit einem Dreibackenspannfutter.

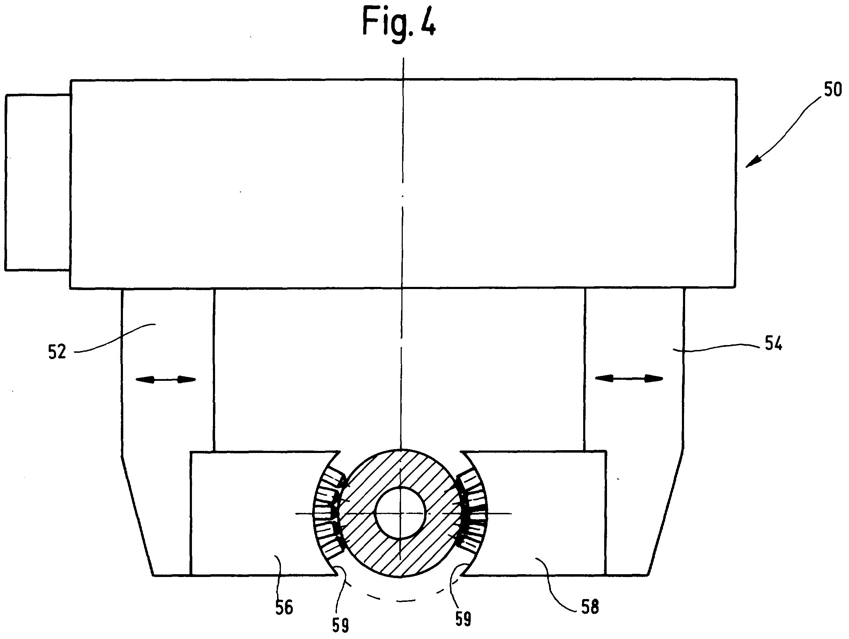

Figur 4 zeigt eine Spanneinrichtung in Form eines Parallelgreifers 50 mit aufeinander zu- bzw. voneinander wegbewegbaren Greiferfingern 52 und 54, an deren freien Enden Spannbacken 56, 58 vorgesehen sind. Die Spannbacken 56, 58 sind bevorzugt zum Greifen rotationssymetrischer Gegenstände ausgebildet, da ihre Spannstössel auf einem Abschnitt einer Kreisbogenlinie 59 angeordnet sind.

Figur 5 zeigt teilweise einen Spannbacken 60, wobei von dessen die Spannseite 62 bildenden Spannstösseln 64 lediglich einer dargestellt ist. Der Spannstössel 64 ist in einer Ausnehmung 66 im Gehäusegrundkörper 68 des Spannbacken 60 verschieblich gelagert.

An seinem von der Spannseite 62 abgewandten Ende umfasst der Spannstössel 64 eine kolbenartige Erweiterung 70. Der Spannstössel 64 ist mit dieser kolbenartigen Erweiterung 70 in einem Zylinderraum 72 verschieblich.

Durch Anlage der kolbenartigen Erweiterung 70 an einen axialen Anschlag 74 des Zylinderraums ist eine Endstellung des Spannstössel 64 definiert. Die kolbenartige Erweiterung 70 gleitet mittels einer O-Ring-Dichtung 76 dichtend in dem Zylinderraum 72, wodurch ein doppelt wirkender Zylinder 78 gebildet ist. Beide Seiten des doppelt wirkenden Zylinders 78 kommunizieren mit einer lediglich angedeuteten pneumatischen Steuereinrichtung 80 und zwar über mit Druckluft beaufschlagbare Leitungen 82 und 84. Durch Anlegen pneumatischen Drucks lassen sich die Spannstössel 64 in die eine oder andere Endstellung oder in eine beliebige Zwischenstellung verfahren.

Mit dem Bezugszeichen 90 ist eine Arretierungseinrichtung zum Festlegen eines jeweiligen Spannstössels 64 gegenüber dem Grundkörper 68 bezeichnet. Die Arretierungseinrichtung 90 umfasst Klemmmittel 91 in Form von Klemmkolben 92, die in einem radial zur Längserstreckung des Spannstössels 64 vorgesehenen Zylinderraum 94 verschieblich sind und von einer mit dem Bezugszeichen 96 angedeuteten hydraulischen Einrichtung steuerbar sind. Ein jeweiliger Klemmkolben 92 umfasst einen an die Umfangsfläche des Spannstössels 64 anlegbaren Klemmbereich 98, welcher der Kontur der Umfangsfläche des Spannstössels 64 angepasst ist und eine vollflächige Auflage des Klemmkolbens 92 am Spannstössel 64 gewährleistet.

Die Arretierungseinrichtung 90 ist zum Einstellen der Gestalt der Spannseite 62 an die Kontur eines Werkstücks gelöst, so dass die Spannstössel 64 nachgiebig verschiebbar sind. Wenn eine Spannstellung erreicht ist, so wird über die hydraulische Einrichtung 96 Druck auf den Klemmkolben 92 ausgeübt, so dass dieser in klemmende Anlage an die Umfangsfläche des Spannstössels 64 gelegt wird.

Die hydraulische Einrichtung 96 kann dabei über ein Schnellkupplungssystem an eine hydraulischen Druck erzeugende Vorrichtung zum Ansteuern der Arretierungsvorrichtung 90 angeschlossen werden. Es wäre aber auch möglich, dass im Bereich der Spannbacken ein Speicherraum zur Ausbildung eines Druckluftpolsters vorgesehen ist, so dass zum Arretieren der Spannstössel 64 auf ein Schnellkupplungssystem verzichtet werden kann.

Auch das Vorsehen einer einfachen Stellschraube, die in eine Leitung 100 der hydraulischen Einrichtung 96 einschraubbar ist, wäre zum Erzeugen eines hydraulischen Drucks zum Fixieren der Spannstössel 64 ausreichend.

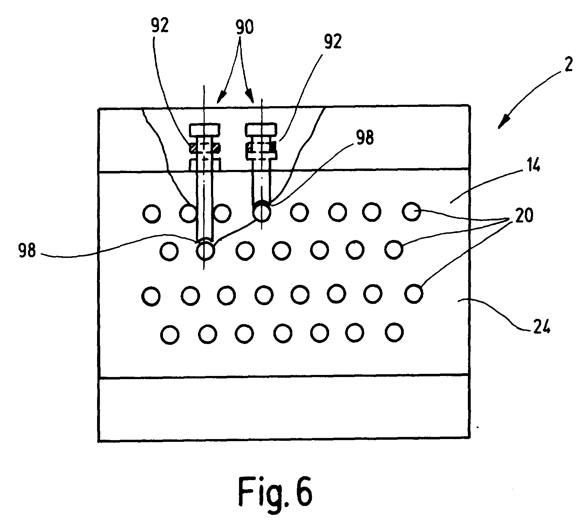

Figur 6 zeigt eine Draufsicht auf die Spannseite 14 beispielsweise des Spannbacken 2 nach Figur 1. Man erkennt eine Vielzahl von Stösseln 20, die rasterartig und zueinander versetzt in vier Reihen angeordnet sind. Die Spannstössel 20 sind senkrecht zur Zeichnungsebene in dem Grundkörper 24 des Spannbackens 2 verschieblich. Jedem Spannstössel 20 ist eine Arretierungseinrichtung 90 zugeordnet wie sie im Zusammenhang mit Figur 5 beispielhaft beschrieben wurde. Man erkennt die Zuordnung eines jeweiligen Klemmkolbens 92 zu jedem Spannstössel sowie die der Umfangsform der Spannstössel 20 entsprechende Formgebung des Klemmbereichs 98 der Klemmkolben 92.

Diejenigen Klemmkolben 92, die auf Spannstössel 20 der beiden mittleren Reihen einwirken, sind zwischen je zwei Spannstösseln der oberen und der unteren Reihe hindurchgeführt.

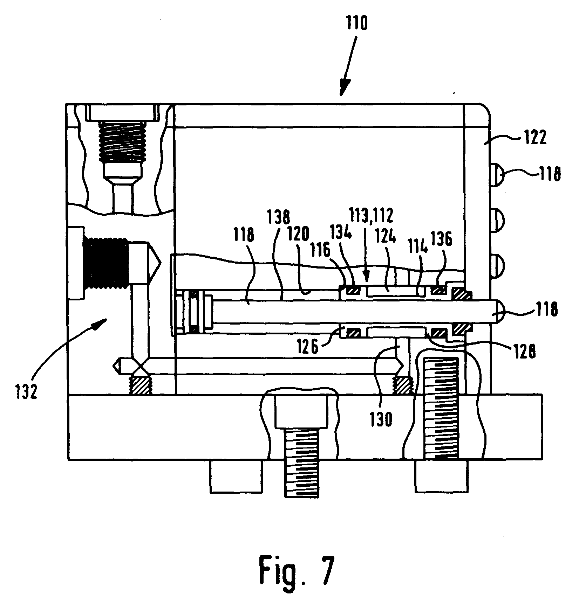

Figur 7 zeigt eine weitere Ausführungsform eines Spannbackens 110, dessen Arretierungseinrichtung 112 Klemmmittel 113 in Form von Klemmhülsen 114 umfasst, die gegen eine axiale Stufe 116 in einer den jeweiligen Spannstössel 118 aufnehmenden Bohrung 120 des Backengrundkörpers abgestützt sind. Anderenends ist die Klemmhülse 114 durch einen Gehäusedeckel 122 gesichert. Jeder Stössel 118 erstreckt sich durch eine jeweilige Klemmhülse 114 hindurch und ist im gelösten Zustand der Arretierungseinrichtung 112 gegenüber der Klemmhülse 114 verschiebbar. An ihrem äußeren Umfang bildet eine jeweilige Klemmhülse 114 einen Druckraum 124, der in axialer Richtung durch Bundabschnitte 126, 128 der Klemmhülse 114 begrenzt ist und als konzentrisch verlaufender Ringraum ausgebildet ist. In den jeweiligen Druckraum 124 jeder Klemmhülse 114 mündet grundkörperseitig eine Druckmittelzuführöffnung 130, die mit einer insgesamt mit dem Bezugszeichen 132 ausgebildeten hydraulischen Einrichtung kommuniziert, die wie im Zusammenhang mit Figur 5 beschrieben ausgebildet sein kann. Zum Abdichten eines jeweiligen Druckraums 124 sind im Bereich der Bundabschnitte 126, 128 O-ringförmige Dichtelemente 134 und 136 vorgesehen.

Wenn über die hydraulische Einrichtung 132 und die Druckmittelzuführöffnung 130 ein jeweiliger Druckraum 124 druckmittelbeaufschlagt wird, so wird die Klemmhülse 114, die im Bereich zwischen den Bundabschnitten 126, 128 mit einer verhältnismäßig geringen Wandstärke ausgebildet ist, derart gegen die äußere Umfangsfläche 138 des Spannstössels 118 gedrückt, dass dieser unverschieblich gestellt wird. Beim Lösen der Druckmittelbeaufschlagung lässt sich der Spannstössel 118 wieder gegenüber der Klemmhülse 114 und dem Gehäusegrundkörper verschieben. Dies wird wie im Zusammenhang mit Figur 5 beschrieben pneumatisch gesteuert durchgeführt.

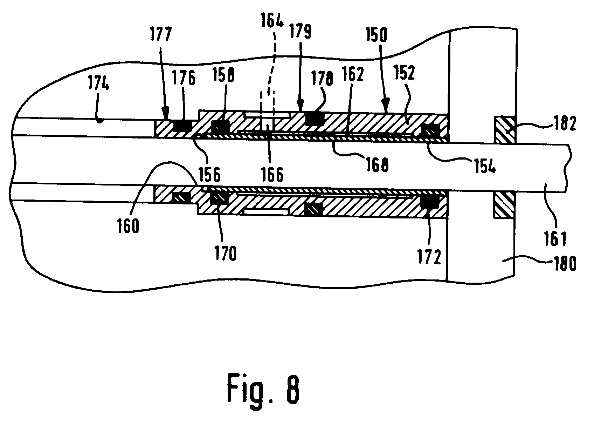

Figur 8 zeigt eine bevorzugte Ausführungform einer zweiteiligen Klemmhülse 150 bestehend aus Außenhülse 152 und Innenhülse 154. Die Innenhülse 154 ist in Form eines exakt zylindrischen Bauteils ausgebildet und in die Außenhülse 152 eingeschoben bis sie mit ihrer Stirnseite 156 an eine axiale Stufe 158 der Außenhülse 152 anstößt. Die radiale Tiefe der Abstufung an der Innenseite der Außenhülse 152 ist entsprechend der Dicke der Innenhülse 154 gemessen, so dass eine stufenfreie Führungsfläche 160 für den Spannstössel 161 gebildet wird.

In einem mittleren Längsabschnitt ist die Außenhülse 152 abermals nach radial außen abgesetzt, so dass in diesem Bereich von der Außenhülse 152 und der Innenhülse 154 ein Druckraum 162 begrenzt wird, in den über eine Zuführöffnung 164 über eine radiale Bohrung 166 in der Außenhülse 152 ein hydraulisches Arbeitsmedium einleitbar ist. Hierdurch wird die Innenhülse 154 mit ihrer Innenseite 168 in klemmende Anlage an den Spannstössel 161 gelegt, so dass dieser in seiner gerade eingenommenen Verschiebelage fixiert werden kann.

Zum Abdichten des Druckraums 162 sind beidseits konzentrische Dichtelemente 170 und 172 zwischen der Innenhülse 154 und der Außenhülse 152 vorgesehen.

Zum Abdichten des Zylinderraums 174, der zum Hin- und Herverschieben der Spannstössel 161 vorzugsweise pneumatisch beaufschlagbar ist, sind radial außen an der Außenhülse 152 ein Dichtelement 176 an einem ersten Stufenabschnitt 177 und ein Dichtelement 178 an einem zweiten Stufenabschnitt 179 der Außenhülse vorgesehen. Die Zuführöffnung 164 mündet zwischen den Dichtelementen 176, 178.

Durch die Verwendung der vorstehend beschriebenen Klemmhülse 150 wird eine große Führungslänge für einen jeweiligen Spannstössel 161 verwirklicht, so dass eine äußere Abschlußplatte 180 lediglich als Schmutzabdeckung benötigt wird und daher entsprechend schwach und damit preisgünstig dimensioniert werden kann. Auf diese Weise wird auch Bauraum in Richtung der Stössellängsachse eingespart. Ein Abstreifelement 182 hat die Aufgabe, ein Eindringen von Schmutz in den Zylinderraum 174 oder in den Bereich der Klemmhülse 150 zu verhindern.

## Patentansprüche

1. Spannbacken für eine Spanneinrichtung zum Spannen von Werkstücken, mit einem Grundkörper und einer an das zu spannende Werkstück anlegbaren Spannseite, wobei die Spannseite von einer Vielzahl von relativ zum Grundkörper mittels einer Steuereinrichtung (80) verschiebbaren Spannstösseln (64, 118, 161) gebildet ist, welche an die Kontur des zu spannenden Werkstücks (18) anlegbar sind, und wobei die hierbei gebildete zur Kontur des Werkstücks (18) komplementäre Kontur der Spannseite durch eine Arretierungseinrichtung (90, 112) lösbar unverformbar gestellt werden kann, **dadurch gekennzeichnet,** dass die Arretierungseinrichtung (90, 112) von der Steuereinrichtung (80) zum Verschieben der Spannstössel (64, 118, 161) unabhängige Klemmmittel (91, 113) umfasst, welche radial auf einen jeweiligen Spannstössel (64, 118, 161) einwirken, um diesen in seiner gerade eingenommenen Verschiebelage zu fixieren.

2. Spannbacken nach Anspruch 1, dadurch gekennzeichnet, dass die Klemmittel (91) von radial auf einen jeweiligen Spannstößel (64) einwirkenden Klemmkolben (92) gebildet sind.

3. Spannbacken nach Anspruch 2, dadurch gekennzeichnet, dass ein Klemmbereich (98) der Klemmkolben (92) der Umfangskontur der Spannstößel (64) angepasst ist.

4. Spannbacken nach Anspruch 2 oder 3, dadurch gekennzeichnet, dass die Klemmkolben (92) gemeinsam betätigbar sind.

5. Spannbacken nach Anspruch 1, dadurch gekennzeichnet, dass die Klemmmittel (113) von jeweils einer einen jeweiligen Spannstössel (118) umgebenden Klemmhülse (114, 150) gebildet sind, die durch Beaufschlagen mittels eines fluiden Arbeitsmediums mit ihrer der Umfangsfläche (138) des jeweiligen Spannstössels (118) zugewandten Innenseite derart gegen diese Umfangsfläche (138) drückbar ist, dass der jeweilige Spannstössel (118) in seiner gerade eingenommenen Verschiebelage fixierbar ist.

6. Spannbacken nach Anspruch 5, dadurch gekennzeichnet, dass die Klemmhülse (114, 150) gegenüber dem Grundkörper im Betrieb des Spannbackens unverschieblich angeordnet ist.

7. Spannbacken nach Anspruch 5 oder 6, dadurch gekennzeichnet, dass die Klemmhülse (114) an ihrem äußeren Umfang einen Druckraum (124) bildet, in welchen unter Druck stehendes fluides Arbeitsmedium zum Klemmen des jeweiligen Spannstössels (118) einleitbar ist.

8. Spannbacken nach Anspruch 7, dadurch gekennzeichnet, dass der Druckraum (124) als die Klemmhülse (114) konzentrisch umgebender Ringraum ausgebildet ist.

9. Spannbacken nach Anspruch 7 oder 8, dadurch gekennzeichnet, dass die Klemmhülse (114) eine Bundhülse ist und die beiderseitigen Bundabschnitte (126, 128) den Druckraum (124) in axialer Richtung begrenzen.

10. Spannbacken nach Anspruch 9, dadurch gekennzeichnet, dass der Druckraum (124) über je ein radial äußeres Dichtelement (134, 136) im Bereich der Bundabschnitte (126, 128) abgedichtet ist.

11. Spannbacken nach einem der vorstehenden Ansprüche 1 bis 10, dadurch gekennzeichnet, dass die Verschiebbarkeit der Spannstössel durch einen Endanschlag begrenzt ist.

12. Spannbacken nach Anspruch 11, dadurch gekennzeichnet, dass der Endanschlag von einer Stirnseite der jeweiligen Klemmhülse (114, 150) gebildet ist.

13. Spannbacken nach einem der Ansprüche 5 bis 12, dadurch gekennzeichnet, dass die jeweilige Klemmhülse (150) eine mit ihrer Innenseite (168) gegen die Umfangsfläche eines Spannstößels anlegbare Innenhülse (154) und eine Außenhülse (152) aufweist und dass zwischen Außenhülse und Innenhülse ein Druckraum (162) gebildet ist, in welchen unter Druck stehendes fluides Arbeitsmedium einleitbar ist, um die Innenhülse in klemmende Anlage gegen die Umfangsfläche des Spannstößels (161) zu bringen.

14. Spannbacken nach Anspruch 13, dadurch gekennzeichnet, dass die Außenhülse (152) und ein die Spannstößel (161) sowie die Außenhülse (152) aufnehmender Zylinderraum (174) zueinander komplementär gestuft ausgebildet sind.

15. Spannbacken nach Anspruch 14, dadurch gekennzeichnet, dass ein erstes radial äußeres Dichtelement (176) in einem ersten Stufenabschnitt (177) und ein zweites radial äußeres Dichtelement (178) in einem zweiten Stufenabschnitt (179), dessen Durchmesser größer ist als der des ersten, angeordnet sind.

16. Spannbacken nach Anspruch 15, dadurch gekennzeichnet, dass in Längsrichtung des Zylinderraums (174) zwischen dem ersten (176) und dem zweiten (178) Dichtelement eine Zuführöffnung (164) für fluides Arbeitsmedium mündet, welches in den Druckraum (162) einleitbar ist.

17. Spannbacken nach einem der Ansprüche 13 bis 16, dadurch gekennzeichnet, dass die Innenhülse (154) gegen eine axiale Stufe (158) an der Innenseite der Außenhülse (152) abgestützt ist.

18. Spannbacken nach Anspruch 17, dadurch gekennzeichnet, dass die radiale Tiefe der Stufe (158) der Außenhülse (152) und die Dicke der Innenhülse (154) so aufeinander abgestimmt sind, dass die den Spannstößeln zugewandte Führungsfläche (160) stufenfrei ist.

19. Spannbacken nach Anspruch 17 oder 18, dadurch gekennzeichnet, dass die Innenhülse (154) von der der Stufe (158) abgewandten Seite der Außenhülse (152) in diese einschiebbar ist.

20. Spannbacken nach einem der Ansprüche 13 bis 19, dadurch gekennzeichnet, dass zum Abdichten des Druckraums (162) zwischen der Außenhülse (152) und der Innenhülse (154) Dichtelemente (170, 172) vorgesehen sind.

21. Spanneinrichtung, gekennzeichnet durch einen Spannbacken nach einem oder mehreren der vorstehenden Ansprüche.
